(19) **Europäisches Patentamt**

**European Patent Office**

**Office européen des brevets**

(11) **EP 0 914 683 B1**

(12) **EUROPEAN PATENT SPECIFICATION**

(45) Date of publication and mention
of the grant of the patent:
**29.01.2003 Bulletin 2003/05**

(51) Int Cl.7: **H01M 4/48**, H01M 4/50

(21) Application number: **96924185.0**

(22) Date of filing: **22.07.1996**

(86) International application number:
**PCT/JP96/02049**

(87) International publication number:
**WO 98/004010 (29.01.1998 Gazette 1998/04)**

(54) **POSITIVE ELECTRODE FOR LITHIUM BATTERY**

POSITIVELEKTRODE FÜR LITHIUMBATTERIE

ELECTRODE POSITIVE DESTINEE A UNE PILE AU LITHIUM

(84) Designated Contracting States:
**DE FR**

(43) Date of publication of application:
**12.05.1999 Bulletin 1999/19**

(73) Proprietor: **Japan Storage Battery Co., Ltd.
Kyoto-shi, Kyoto 601 (JP)**

(72) Inventors:
- **AMINE, Khalil, Japan Storage Battery Co., Ltd
  Kyoto-shi, Kyoto 601 (JP)**
- **YASUDA, Hideo, Japan Storage Battery Co., Ltd
  Kyoto-shi, Kyoto 601 (JP)**

- **FUJITA, Yuko, Japan Storage Battery Co., Ltd
  Kyoto-shi, Kyoto 601 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 712 173       EP-A- 0 717 455
WO-A-94/25398       WO-A-96/10538
GB-A- 2 270 195       US-A- 5 169 736**

EP 0 914 683 B1

## Description

The present invention relates to a positive electrode active material for a lithium battery and a method for its preparation. Particularly it relates to a positive electrode active material based on lithium manganese spinel oxide wherein nanganese is partially substituted with nickel, cobalt, iron, magnesium or zinc.

As positive electrode active material for a lithium battery, manganese dioxide for a primary battery and vanadium oxide ($V_2O_5$), lithium cobalt oxide ($LiCoO_2$), etc. for a secondary battery have already been put in practical applications, while many other materials have been proposed including lithium nickel oxide ($LiNiO_2$), lithium manganese oxide ($LiMn_2O_4$). Among these materials, lithium manganese oxide is regarded as promising because of the low cost of the production, and nontoxicity of manganese. Representative among lithium manganese oxides is the spinel oxide ($LiMn_2O_4$) Which has a three dimensional structure. Charge and discharge reactions of a lithium secondary battery wherein manganese spinel oxide is used as the positive electrode active material take place in the following two stages.

$$Li_{1-x}Mn_2O_4^- + xLi^+ + xe^- \rightarrow LiMn_2O_4 \tag{1}$$

$$LiMn_2O_4 + Li^+ e^- \rightarrow Li_2Mn_2O_4 \tag{2}$$

The discharge process represented by equation (1) takes place at a potential of about 4V with respect to a lithium reference electrode ($Li/Li^+$) with the crystal in this process having cubic structure, while the discharge reaction represented by equation (2) takes place at a potential of about 3V or lower with the crystal structure changing from a cubic structure to a tetragonal structure. Theoretical discharge capacity density is 154mAh/g in both cases of equations (1) and (2).

However, as reported in J. Electrochem. Soc., 137,769, (1990), etc., the lattice constant changes resulting in a change in the unit cell volume in the discharge process of ($0 \leqq x \leqq 1$), despite the crystal structure remains in a cubic structure. According to Mate., Res, Bull., 18,461 (1983) and Solid State Ionics 69,59 (1994), when the value of x approaches 1 in the discharge process of $Li_xMn_2O_4$ ($0 \leqq x \leqq 1$) and further shifting to $Li_xMn_2O_4$ ($1 \leqq x \leqq 2$), the crystal structure changes from a cubic structure to a tetragonal structure due to the Jahn-Teller effect. At this time, a great change in the unit cell volume occurs because the value of crystal lattice constant ratio c/a increases by 16%. Such a change in volume causes the electron collecting performance of the electrode to decrease, resulting in the decrease in the capacity. Because the volume change due to the Jahn-Teller effect is particularly substantial, it has been common to use the battery in the region of 4V corresponding to equation (1) or in the region of 3V corresponding to equation (2). The decrease in the capacity with the process of charge and discharge processes in a battery employing lithium manganese spinel oxide as the positive electrode active material is also attributed to the dissolution of manganese ions included in the crystal into the electrolyte, as reported in J. Power Sources, 43-44, 223 (1993) and J. Power Sources, 52, 185 (1994). That is, the average valence of manganese is over 35 during the process of equation (1), but decreases below 35 during the process of equation (2) during which the amount of trivalent manganese ion increases. With the presence of manganese ions having a valence of 3, a disproportionate reaction of equation (3) occurs where the produced divalent manganese ions are partially dissolved in the electrolyte of Lithium thereby, resulting in the decomposition of active material and the loss of the reversibility of the electrode.

$$2Mn^{3+} \text{ (solid phase)} \rightarrow Mn^{4+} \text{ (solid phase)} + Mn^{2+} \text{ (dissolved)} \tag{3}$$

The dissolution of manganese can also be observed through change of color of the organic electrolyte from colorless to light purplish red. Thus keeping the valence of manganese as high as possible is effective in preventing the decrease in capacity.

The Journal of Electrochemical Society, 138, (10), 2859 (1991) discloses an attempt of substituting a part of manganese with another metal. It is reported that, in case nickel is employed as the substituting metal, when discharging in a range from 4.5V to 2.0V while changing the value of y in chemical formula $Li_xMn_{2-y}Ni_yO_4$, three potential plateaus are observed at 3.9V, 2.8V and 2.2V and the discharge capacity shows greater decrease at both 3.9V plateau and 2.8V plateau as the value of y increased. This doped spinel is prepared in solid phase reaction by means of firing, while using $Li_2CO_3$, $MnO_2$ and the oxide of the partially substituting metal as the starting materials.

EP0712173A1 discloses that the use of a lithium manganese composite oxide-defect type spinel structure provides monotonous variation of the potential during the charging and discharging process. Further, WO96/10538 discloses that ternary lithium mixed oxides of the general formula $Li_yMeMn_{2-x}O_4$ having a spinel type in which Me means various metals, are suitable as a cathode material for a lithium secondary battery. However, both of these references relate to conventional 4V class lithium batteries. EP717455 discloses the manufacture of spinels of lithium manganese-substituted by a metal cation-oxide involving a high temperature solid state reaction.

In the Japanese Patent Application Laid-Open No.3-285262, it is reported that good cycle characteristic is obtained from an electrode fabricated from a positive electrode active material represented by general formula $Li_{1+y}Mn_{2-z}A_zO_4$ ($0 \leqq y \leqq 1$, $0 \leqq z \leqq 0.5$, and A is at least one element selected from the group consisting of Ti, V, Cr, Mo, Ni and Fe), an electricity conducting agent and a binder. A battery employing $Li_{1.1}Mn_{1.8}Co_{0.2}O_4$ as the positive electrode active material and metallic sodium as the negative electrode active material, for example, shows discharge characteristic ranging from 4.1V to 3.7V.

The Japanese Patent Application Laid-Open No.63-274059 discloses that a battery represented by a general formula $LiMn_2O_4$ employing a positive electrode active material, which shows a X-ray diffraction peak of half-power width from 1.1 to 2.1 when irradiated with Fe(ka) line at a diffraction angle of 46.1° and a negative electrode active material of metallic lithium has good discharge characteristic with discharge voltage being around 2.5V with a resistance of 1KΩ. The positive electrode active material is manufactured through solid phase reaction with heat treatment being applied to lithium carbonate and manganese dioxide in air at a temperature from 400 to 520° C.

The Japanese Patent Application Laid-Open No.4-87268 discloses that a battery represented by a general formula $Li_xMn_{2-y}Fe_yO_4$ ($0<x$ $0<y<2$) employing a manganese-iron-lithium compound oxide of spinel structure op similar spinel structure as the positive electrode active material and a laminated plate of aluminum and metallic lithium as the negative electrode active material shows discharge characteristic having discharge Capacity which increases When the operating voltage is in high-voltage region of 3V and 5V higher, while the discharge takes place in two stages. It is described that the active material is preferably manufactured in solid reaction by firing a mixture of oxides, hydroxides, carbonates, nitrates, etc. of Mn, Fe and Li in a specified proportion in an atmosphere of air or oxygen at a temperature above 450° C, preferably from 600 to 1000°C.

In the prior art, as described above, there has been such problems that partial substitution of manganese in a spinel lithium manganese oxide with another metal exhibit two plateaus or 4V and 3V during the charge and discharge processes with the crystal structure changes as charge and discharge processes are repeated, resulting in the expansion and contraction of the unit cell volume and a decrease in the capacity.

It is the object of the present invention to provide a positive electrode active material for very high voltage lithium battery where charge and discharge reactions proceed in one phase reaction and a monotonous variation of the potential can be obtained, and

wherein the crystal structure does not change with charge and discharge reactions, the unit cell volume experiences less change and the capacity experiences less decrease as the charge and discharge operations are repeated, and a method for manufacturing the same.

This object is achieved by a positive electrode active material for a lithium battery, having the general formula

$$Li_xMn_{2-y}M_yO_4$$

wherein M is a 2-valent metal selected from the group consisting of Ni, Co, Fe, Mg and Zn; and $0.45 \leq y \leq 0.60$, $0 \leq x \leq 1$, said material having a cubic spinel structure with a lattice constant of 819,0 pm (8.190 Å) or smaller.

The present invention provides a first method for manufacturing the above positive electrode active material by employing a solid phase reaction comprising firing a lithium compound, a manganese compound and a metal M compound; and refiring the fired material after pressurizing it at least once.

According to the first method of the present invention it is preferred that the lithium compound, the manganese compound and the metal M compound are lithium nitrate, manganese carbonate and nickel nitrate, respectively.

According to the first method of the present invention the firing temperatures of the firing and refiring steps preferably are from 650° to 850°C.

The present invention further provides a second method for manufacturing the above positive electrode active material by employing a sol-gel process, comprising dissolving a lithium compound, a manganese compound and a metal M compound in alcohol or water; adding ammonia water to the solution obtained in order to gelatinize it thereby; and firing the gelatinous substance thus obtained.

According to the second method of the present invention it is preferred that the lithium compound is selected from the group consisting of an inorganic salt of lithium, lithium hydroxide, an organic acid salt of lithium and mixtures thereof, the manganese compound is selected from the group consisting of an inorganic salt of manganese, an organic acid salt of manganese and mixtures thereof, and the metal M compound is selected from the group consisting of an inorganic salt of the metal M, an organic acid salt of the metal M and mixtures thereof.

According to the second method of the present invention it is particularly preferred that the manganese compound is selected from the group consisting of formic acid manganate, oxalic acid manganate, citric acid manganate, butyric acid manganate, a manganese acetylacetone compound, nitric acid manganate, acetic acid manganate and sulfuric acid manganate, and the metal M compound is selected from the group consisting of a formic acid salt of the metal M, a butyric acid salt of the metal M, an acetylacetone compound of the metal M, a nitric acid salt of the metal M and a sulfuric acid salt of the metal M.

According to the second method of the present invention the firing temperature of the firing step preferably is from 200° to 400°C.

According to the second method of the present invention it is preferred that the method further comprises a step of adding a gel stabilizing agent to the solution obtained said gel stabilizing agent being preferably selected from the group consisting of carbon black, carbons other than carbon black, gelatin and polyvinyl alcohol.

The present invention further provides a high voltage lithium battery (4.7 V), comprising a positive electrode employing the above active material and a negative electrode employing a material selected from the group consisting of metallic lithium, lithium alloy, carbon and graphite.

The positive electrode active material for the lithium battery of the invention is represented by the general formula $Li_xMn_{2-y}M_yO_4$ (M: a 2-valence metal selected from Ni, Co, Fe, Mg and Zn with $0.45 \leqq y \leqq 0.60$, $0 \leqq x \leqq 1$) having a cubic spinel structure with a lattice constant of 819,0 pm (8.190 Å) or smaller. In the case a solid phase reaction process is employed, the positive electrode active material is manufactured by repeating the process of firing lithium carbonate and nickel nitrate in a temperature range from 750 to 850°C while applying pressure-treatment in the course . In case the sol-gel process is employed, one of inorganic salt, hydroxide and organic acid salt of lithium or a mixture of these for Li, one of inorganic salt and organic acid salt of manganese or a mixture of these for Mn, and one of inorganic salt and organic acid salt of the selected metal or a mixture of these for M, are used as the starting materials for the synthesis. Gelling process to obtain gelatinous material by adding ammonia water to the solutions of these starting materials or alcohol or water and process to fire the gelatinous thus obtained, was carried out to synthesize a compound $Li_xMn_{2-y}M_yO_4$ ($0 \leqq x \leqq 1$) with $0.45 \leqq y \leqq 0.60$

The above and further objects and features of the invention more fully be apparent from the following detailed description with accompanying drawings.

FIG. 1 shows X-ray diffraction pattern of $Li_xMn_{1.5}Ni_{0.5}O_4$ (x=1) prepared by the sol-gel process

FIG.2 XPS $Ni2p_{3/2}$ of NiO used as reference (FIG. 2a), $Li_xMn_{1.5}Ni_{0.5}O_4$ (x=1) (FIG.2b) and $LiNiO_2$ used as reference (FIG. 2c)

FIG.3 Shows the cyclic voltammetry of $Li_xMn_{1.5}Ni_{0.5}O_4$ (x=1) in the range between 4.2V ~5.1V.

FIG.4 shows charge and discharge characteristic of a case where $Li_xMn_{1.5}Ni_{0.5}O_4$ of the invention is used.

FIG. 5 shows the variation of the discharge capacity with cycle number of $Li_xMn_{1.5}Ni_{0.5}O_4$.

Nickel was selected as an example of partially substituting metal of doped manganese spinel oxide and method and conditions for synthesizing it were studied

$Li_xMn_{2-y}M_yO_4$ material (M:metal, $0 \leqq x \leqq 1$ and $0.45 \leqq y \leqq 0.60$) was prepared using both the sol-gel process and the solid state reaction process.

First, solid phase reaction process described previously was tried as the method of synthesis. Various amounts of doped nickel was tried for y= 0, 0.1, 0.2, 0.4 and 0.5 in the general formula $Li_xMn_{2-y}M_yO_4$, wherein $Li_2CO_3$, LiOH, and $LiNO_3$ were selected as lithium source and

NiO, $Ni(OH)_2$ $Ni(NO)_3$ and $Ni_2C_2O_4$ as metal M source. As a result, when the value of y is within 0.2, a pure spinel phase could be easily obtained with a slight decrease in the unit cell parameter. However, when the value of y increases and particularly when it exceeds 0.2, it became difficult to substitute manganese with nickel, and impurity of NiO always remained. This tendency was observed regardless of the kind of starting materials. Thus it was found that pure spinel was not obtained when the proportion manganese substituted with nickel exceeded 0.2, although the study of various starting materials and synthesis conditions showed that pure $Li_xMn_{1.5}M_{0.5}O_4$ is difficult to obtain but could be obtained if lithium nitrate, manganese carbonate nickel nitrate are used as starting materials, and if the recalcination process (firing temperature: 750 to 850°C) after pressurization of the material is repeated several times.

Then sol-gel preparation of the nickel doped spinel $Li_xMn_{1.5}Ni_{0.5}O_4$ (firing temperature: 200°C to 400°C) was investigated by using manganese acetate (II), nickel acetate and lithium nitrate as the starting materials and carbon black as stabilizing agent. It was found that a pure spinel phase can be obtained much easier than in the case of the solid phase reaction described previously even when the value of y in $Li_xMn_{2-y}Ni_yO_4$ is 0.5, namely with the composition of $Li_xMn_{1.5}Ni_{0.5}O_4$, This reaction is assumed to proceed as follows.

$$LiMn_{1.5}Ni_{0.5}(CH_3COO)_6(OH)_2 + 12O_2 \rightarrow Li_xMn_{1.5}Ni_{0.5}O_4 + 10H_2O + 12CO_2$$

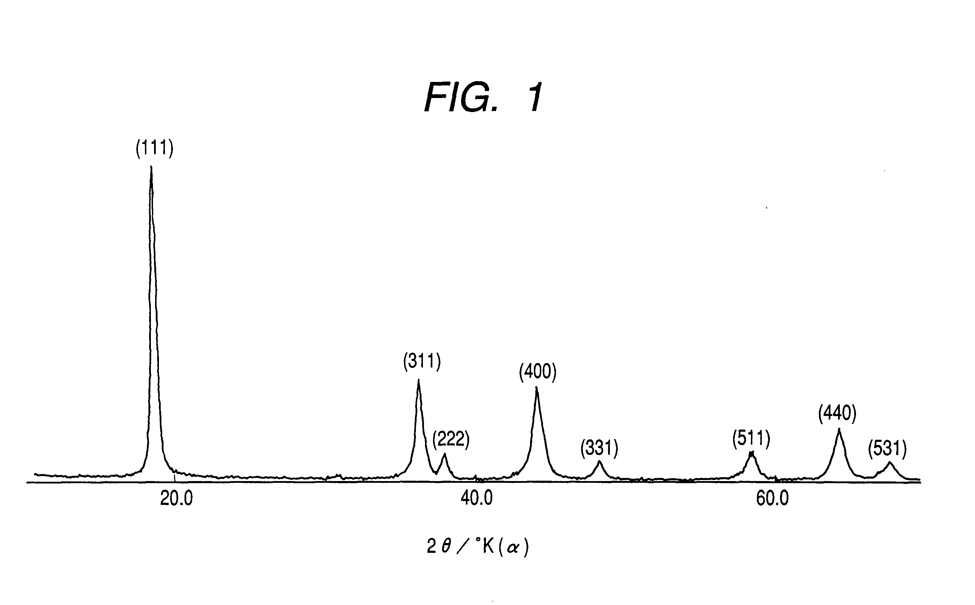

X-ray diffraction analysis of the obtained $Li_xMn_{1.5}Ni_{0.5}O_4$ (FIG.1) showed a spinel structure having a lattice constant of 817.4 pm (8.174 Å). Ion chromatography and atomic absorption showed that its chemical composition was $Li_{1.03}Mn_{1.56+0.05}Ni_{0.52+0.05}O_4$ and $Li_{0.99}Mn_{1\cdot56+0.05}Ni_{0.52+0.05}O_4$. As the starting material of the compound described above in the sol-gel process, organic acid salts such as formic acid salt, oxalic acid salt, citric acid salt and butyric acid salt, acetyl-acetonate complex, nitrate and sulfate are effective besides acetate described above for manganese, organic acid salts and inorganic salts similar to those used in the case of manganese are effective besides acetate described above for nickel and various partially substituting metals other than nickel, and various organic acid salts, Inorganic salts and hydroxides besides nitrate described above can be used for lithium. As for the gel stabilizing agent, carbon black is the best suited because it can be used as electron conducting material as it is the case when preparing an electrode as described previously, while carbons other than carbon black and materials having viscous property such as gelatin and polyvinyl alcohol which have been in public knowledge may also be used.

The oxidation state of $LiMn_{1.5}Ni_{0.5}O_4$ was deduced by comparing the X-ray electron spectroscopy (XPS) of the sample with several references having different oxidation states such as NiO and $LiNiO_2$. The binding energy scale was calibrated by setting the $C_{1s}$ peak of carbon at 2843 eV. Since $Ni2p_{3/2}$ binding energy of nickel is known to be affected by both the oxidation state of the metal itself, and the nearest neighboring ligant. All nickel ions in the chosen references are surrounded by the same oxygen octahedral environment as in $LiMn_{1.5}Ni_{0.5}O_4$ sample. Therefore, the observed shift of the $Ni2p_{3/2}$ binding energy could be related only to the difference in the oxidation state of nickel ions

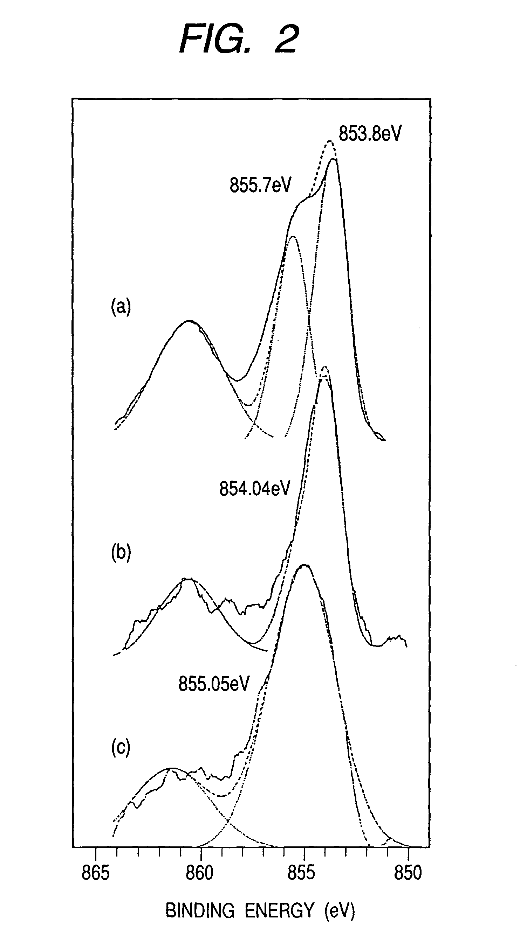

Fig. 2 compares the $Ni2p_{3/2}$ emission spectra of NiO, $LiMn_{1.5}Ni_{0.5}O_4$ and $LiNiO_2$. The $Ni2p_{3/2}$ emission spectrum of NiO sample has asymmetric peaks showing a long tail at the higher binding energy (FIG.2a). The asymmetry suggests the presence of nickel at different oxidation states. The overall spectrum may be deconvoluted mainly into two gaussian peaks. The binding energy of the main peak situated at 853.8 eV is similar to those reported for the nickel oxide. The peak situated at higher energy corresponds to nickel at the (+III) oxidation state. The binding energy of this peak (855.7 eV) is very close to the one observed in $LiNiO_2$ sample (855.05eV) where nickel is in the trivalent state (FIG.2c). This peak could arise from the presence of impurities in the NiO used in the analysis.

FIG.2b shows the $Ni2p_{3/2}$ emission spectra of $LiMn_{1.5}Ni_{0.5}O_4$. Only one sharp peak associated with a broad satellite is observed. The binding energy of this peak (854.04 eV) is comparable to that of NiO, and falls within the binding energies of materials having divalent nickel[18]. This result confirms clearly the (+II) oxidation state of nickel in $LiMn^{IV}_{1.5}Ni^{II}_{0.5}O_4$ sample. In this case, and since Mn is in tetravalent state, it is therefore difficult to remove lithium from $LiMn^{IV}_{1.5}Ni^{II}_{0.5}O_4$ by considering the oxidation of $Mn^{IV}$ because of the difficulty of oxidizing these ions to higher state. However, and because of the presence of substantial amount of divalent nickel, it possible to remove lithium from $LiMn^{IV}_{1.5}Ni^{II}_{0.5}O_4$ by oxidizing $Ni^{II}$ to higher state for instance $Ni^{IV}$. As lithium is extracted from the material, a corresponding electrons are removed, these electrons come from the top of the valence band which are usually the 3d eg level in the case of metal transition such as Mn and Ni. Since there is no electron eg in $Mn^{IV}$ due to the substantial doping with divalent nickel, only the electron which are situated at the top of the eg level of nickel could be removed inducing thus the extraction of lithium from $Li_{1-x}Mn^{IV}_{1.5}Ni^{II}_{0.5}O_4$ and because the eg level of Ni has a binding energy of over 0.6eV higher than that of Mn, it is than expected that lithium could be removed from the material $Li_{1-x}Mn^{IV}_{1.5}Ni^{II}_{0.5}O_4$ at voltage at least 0.6 V higher than that of the spinel without nickel doping (4.1V) hereby giving a battery with a potential as high as 4.7 V.

In order to study the electrochemical properties of pure $Li_{1-x}Mn_{1.5}Ni_{0.5}O_4$, powder obtained as described above, a flooded type cell was made from Ketjen black as electron conducting material, PVDF as binder and stainless mesh as electron collector, two metal lithium electrodes as opposing electrodes and a mixture solution of ethylene carbonate and diethylcarbonate (1:1) including 1M of $LiPF_6$ dissolved in sulfolane was used as electrolyte because it is stable over 5V. Charge and discharge characteristic was studied by discharging to 3.5V after charging to 5.0V with a current density of $0.5mA/cm^2$. The electrochemical performance of $Li_{1-x}Mn_{1.5}Ni_{0.5}O_4$ was first investigated by cyclic voltammetry. The test was conducted at room temperature using as reference electrode $Li/Li^+$ at a scanning rate of 0.20 mV/s. The potential scan was limited to 5.1V *vs.* $Li/Li^+$ because of the possible electrolyte decomposition at higher voltage.

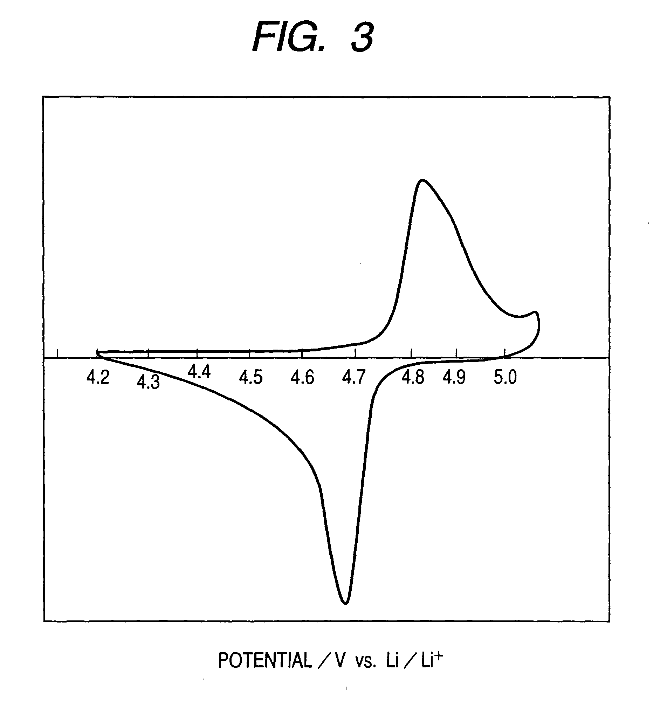

Fig. 3 shows the cyclic voltammogram of $Li_{1-x}Mn_{1.5}Ni_{0.5}O_4$. Upon cycling, only one oxidation peak and one reduction peak are clearly observed at around 4.7V. The existence of these two peaks indicates a reversible one stage process for extracting and than intercalating lithium in $Li_{1-x}Mn_{1.5}Ni_{0.5}O_4$.

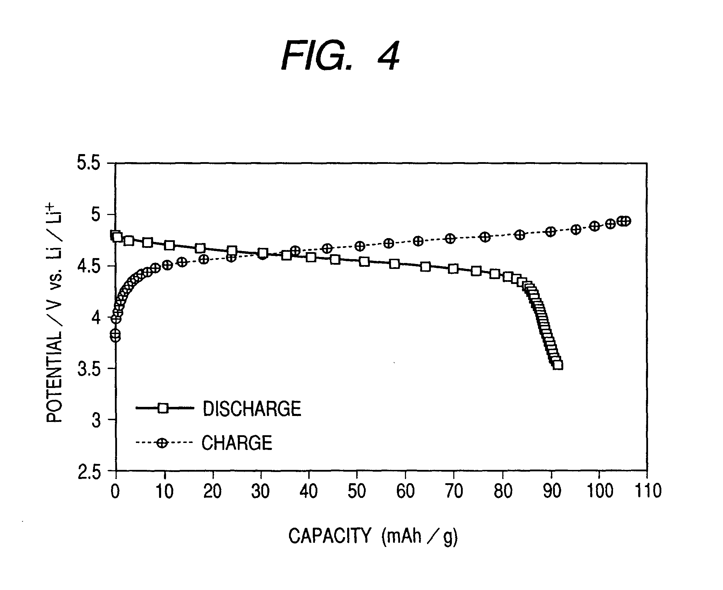

Fig. 4 shows the charge and discharge characteristics of $Li_{1-x}Mn_{1.5}Ni_{0.5}O_4$ at a current density of 0.5 mA/$cm^2$. The cell with $LiMn_{1.5}Ni_{0.5}O_4$ as the electrode was first charged to extract lithium and oxidize divalent nickel to tetravalent nickel, the charge-discharge curves present a one plateau at around 4.7 V vs. $Li/Li^+$ and a capacity of 92 mAh/g. The absence of the 4V plateau in these cases could be explained by the fact that manganese ions are tetravalent in $LiMn_{1.5}Ni_{0.5}O_4$ sample and therefore it is difficult to oxidize these ions further by electrochemical extraction of lithium at 4V *vs*. Li/Li$^+$.

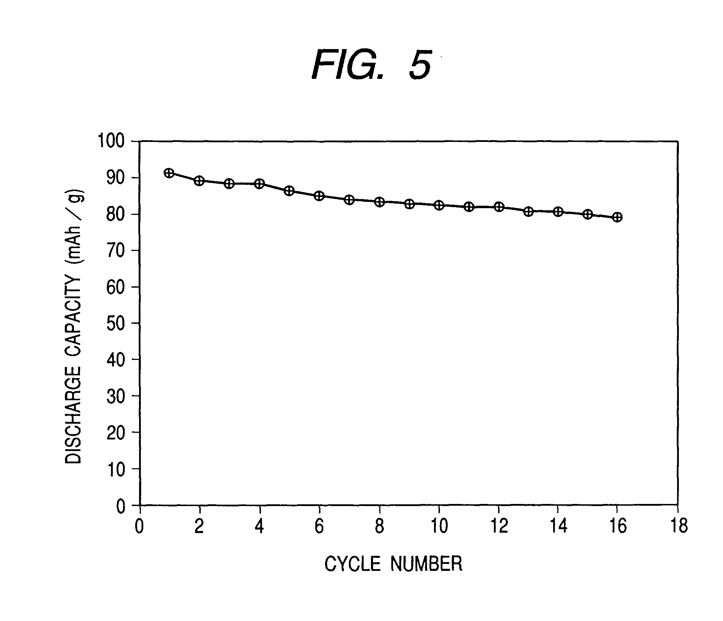

Fig. 5 shows the variation of the discharge capacity of Li$_{1-x}$Mn$_{1.5}$Ni$_{0.5}$O$_4$ with the cycle number. In this case, a good cyclic reversibility is observed because during the extraction of lithium the spinel structure remain regular with lithium is removed smoothly from the tetrahedral 8a channels. Such a result is totally different from the inverse spinels which shows also a high voltage of 4.8V and poor cycliability because lithium is blocked by the metal transition since they both situated in the octahedral 32 a site of the spinel and no empty channels are available for lithium diffusion in this case.

Now embodiments of the invention will be described below.

Example I

Li$_{1-x}$Mn$_{1.5}$Ni$_{0.5}$O$_4$ was synthesized using the sol-gel process. First, solutions of manganese acetate (II) (4g), nickel acetate (15g) and lithium nitrate (0.75g) dissolved in 50ml, 80ml and 40ml of ethyl alcohol or water, respectively, were mixed and stirred vigorously. Then 30mg of carbon black was added as gel stabilizing agent. carbon black also serves as repressor of Mn$_2$O$_3$ generation in the final compound. After stirring for 30 minutes, 30ml of 25% ammonia water was added. Precipitated substance thus obtained was dried in a rotary evaporator under vacuum, resulting in a viscous gel-like substance being produced. By coating a titanium foil with this substance and firing it at 300°C. In air for three days, the positive electrode of the invention was obtained. X-ray diffraction analysis of this sample shows that diffraction peaks of this active material is broad and the lattice constant is 816.9 pm (8.169 Å) which is smaller than that of the conventional lithium manganese spinel LiMn$_2$O$_4$ (823 pm [8.23 Å]). Ion chromatography and atomic absorption showed that its chemical composition was Li$_{1.03}$Mn$_{1.56+0.05}$Ni$_{0.52+0.05}$O$_4$ and Li$_{0.99}$Mn$_{1\cdot56+0.05}$Ni$_{0.52+0.05}$O$_4$.

Then the powder thus obtained, carbon black and PVDF dissolved in NMP and coated in a stainless steel mesh then pressed to make an electrode. Using this electrode as positive electrode, a lithium foil as negative electrode, a solution (1:1) of IM LiPF$_6$ dissolved in sulfolane as the electrolyte, and a lithium reference electrode, a cell was formed. When this cell was operated with current density of 0.5 mAh/cm$^2$ and voltage range from 35 to 5.0V (Li/Li$^+$) to determine the charge and discharge characteristics, discharge capacity with ending voltage of 3.5V (Li/Li$^+$) was from 75mAh/g to 125mAh/g. The discharge capacity showed no significant difference after repeating the charging and discharging.

Charging and discharging reactions of the lithium manganese spinel oxide according to the invention proceed in a uniform one phase reaction. Moreover, the regular cubic spinel structure is maintained as the charging and discharging is carried out. resulting in better cycliability. Therefore, a new 4.7V class battery of good service life can be made by using carbon, graphite, metallic lithium or lithium alloy as the negative electrode active material.

**Claims**

1. A positive electrode active material for a lithium battery, having the general formula

$$Li_xMn_{2-y}M_yO_4$$

   wherein M is a 2-valent metal selected from the group consisting of Ni, Co, Fe, Mg and Zn; and 0.45≤y≤0.60, 0≤x≤1, said material having a cubic spinel structure with a lattice constant of 819.0 pm (8.190 Å) or smaller.

2. A method for manufacturing the positive electrode active material of claim 1 by employing a solid phase reaction comprising

   firing a lithium compound, a manganese compound and a metal M compound; and
   refiring the fired material after pressurizing it at least once.

3. The method of claim 2, wherein the lithium compound, the manganese compound and the metal M compound are lithium nitrate, manganese carbonate and nickel nitrate, respectively.

4. The method of claim 2 or 3, wherein the firing temperatures of the firing and refiring steps are from 650° to 850°C.

5. A method for manufacturing the positive electrode active material of claim 1 by employing a sol-gel process, comprising

dissolving a lithium compound, a manganese compound and a metal M compound in alcohol or water;
adding ammonia water to the solution obtained in order to gelatinize it thereby; and
firing the gelatinous substance thus obtained.

6. The method of claim 5, wherein the lithium compound is selected from the group consisting of an inorganic salt of lithium, lithium hydroxide, an organic acid salt of lithium and mixtures thereof,
the manganese compound is selected from the group consisting of an
inorganic salt of manganese, an organic acid salt of manganese and mixtures thereof, and
the metal M compound is selected from the group consisting of an inorganic salt of the metal M, an organic acid salt of the metal M and mixtures thereof.

7. The method of claim 5 or 6, wherein the manganese compound is selected from the group consisting of formic acid manganate, oxalic acid manganate, citric acid manganate, butyric acid manganate, a manganese acetylacetone
compound, nitric acid manganate, acetic acid manganate and sulfuric acid manganate, and
the metal M compound is selected from the group consisting of a formic acid salt of the metal M, a butyric acid salt of the metal M, an acetylacetone compound of the metal M, a nitric acid salt of the metal M and a sulfuric acid salt of the metal M.

8. The method of any of claims 5 to 7, wherein the firing temperature of the firing step is from 200° to 400°C.

9. The method of any of claims 5 to 8, further comprising a step of adding a gel stabilizing agent to the solution obtained.

10. The method of claim 9, wherein the gel stabilizing agent is selected from the group consisting of carbon black, carbons other than carbon black, gelatin and polyvinyl alcohol.

11. A high voltage lithium battery (4.7 V), comprising

a positive electrode employing the active material of claim 1 and
a negative electrode employing a material selected from the group consisting of metallic lithium, lithium alloy, carbon and graphite.

**Patentansprüche**

1. Aktives Material der positiven Elektrode für eine Lithiumbatterie mit der allgemeinen Formel

$$Li_xMn_{2-y}M_yO_4,$$

worin M ein zweiwertiges Metall, ausgewählt aus der Gruppe bestehend aus Ni, Co, Fe, Mg und Zn; und
$0,45 \leq y \leq 0,60$, $0 \leq x \leq 1$ ist,
wobei das Material eine kubische Spinellstruktur mit einer Gitterkonstanten von 819,0 pm (8,190 Å) oder kleiner hat.

2. Verfahren zum Herstellen des aktiven Materials der positiven Elektrode von Anspruch 1 unter Anwendung einer Festphasenreaktion, umfassend das Brennen einer Lithiumverbindung, einer Manganverbindung und einer Metall-M-verbindung, und das nochmalige Brennen des gebrannten Materials nach wenigstens einmaligem Unterdrucksetzen.

3. Verfahren nach Anspruch 2, worin die Lithiumverbindung, die Manganverbindung und die Metall-M-verbindung Lithiumnitrat, Mangancarbonat und Nickelnitrat sind.

4. Verfahren nach Anspruch 2 oder 3, worin die Brenntemperaturen des Brennschrittes und des nochmaligen Brennschrittes 650 °C bis 850 °C betragen.

5. Verfahren zur Herstellung des aktiven Materials der positiven Elektrode von Anspruch 1 unter Anwendung eines Sol-Gel-Verfahrens, umfassend

das Auflösen einer Lithiumverbindung, einer Manganverbindung und einer Metall-M-verbindung in Alkohol oder Wasser,
das Zugeben von Ammoniakwasser zu der erhaltenen Lösung, um sie dadurch zu gelatinisieren, und
das Brennen der so erhaltenen gelatineartigen Substanz.

6. Verfahren nach Anspruch 5, worin die Lithiumverbindung ausgewählt ist aus der Gruppe bestehend aus einem anorganischen Lithiumsalz, Lithiumhydroxid, einem organischen Salz von Lithium und Mischungen davon, die Manganverbindung ausgewählt ist aus der Gruppe bestehend aus einem anorganischen Mangansalz, einem organischen Säuresalz von Mangan und Mischungen davon, und die Metall-M-verbindung ausgewählt ist aus der Gruppe bestehend aus einem anorganischen Salz des Metalls M, einem organischen Säuresalz des Metalls M und Mischungen davon.

7. Verfahren nach Anspruch 5 oder 6, worin die Manganverbindung ausgewählt ist aus der Gruppe bestehend aus Ameisensäuremanganat, Oxalsäuremanganat, Citronensäuremanganat, Buttersäuremanganat, einer Mangan-Acetylaceton-Verbindung, Salpetersäuremanganat, Essigsäuremanganat und Schwefelsäuremanganat, und die Metall M-verbindung ausgewählt ist aus der Gruppe bestehend aus einem Ameisensäuresalz des Metalls M, einem Buttersäuresalz des Metalls M, einer A-cetylacetonverbindung des Metalls M, einem Salpetersäuresalz des Metalls M und einem Schwefelsäuresalz des Metalls M.

8. Verfahren nach einem der Ansprüche 5 bis 7, worin die Brenntemperatur des Brennschrittes 200 °C bis 400 °C beträgt.

9. Verfahren nach einem der Ansprüche 5 bis 8, welches weiterhin einen Schritt der Zugabe eines Gel-stabilisierenden Mittels zu der erhaltenen Lösung umfasst.

10. Verfahren nach Anspruch 9, worin das Gel-stabilisierende Mittel ausgewählt ist aus der Gruppe bestehend aus Ruß, von Ruß verschiedenen Kohlenstoffen, Gelatine und Polyvinylalkohol.

11. Eine Hochspannungs-Lithiumbatterie (4,7 V), umfassend eine das aktive Material von Anspruch 1 verwendende positive Elektrode und eine ein Material, ausgewählt aus der Gruppe bestehend aus metallischem Lithium, Lithiumlegierung, Kohlenstoff und Grafit, verwendende negative Elektrode.

**Revendications**

1. Matériau actif d'électrode positive destiné à une batterie d'accumulateurs au lithium, de formule générale

$$Li_xMn_{2-y}M_yO_4$$

M étant un métal bivalent choisi dans le groupe formé par Ni, Co, Fe, Mg et Zn, et
$0,45 \leq y \leq 0,60, 0 \leq x \leq 1$
le matériau ayant une structure cubique de spinelle ayant une constante de réseau de 819,0 pm (8,190 Å) ou inférieure.

2. Procédé de fabrication du matériau actif d'électrode positive selon la revendication 1 par utilisation d'une réaction en phase solide comprenant :

la cuisson d'un composé du lithium, d'un composé du manganèse et d'un composé d'un métal M, et
la recuisson du matériau cuit après sa mise sous pression au moins une fois.

3. Procédé selon la revendication 2, dans lequel le composé du lithium, le composé du manganèse et le composé du métal M sont respectivement le nitrate de lithium, le carbonate de manganèse et le nitrate de nickel.

4. Procédé selon la revendication 2 ou 3, dans lequel les températures de cuisson dans les étapes de cuisson et de recuisson sont comprises entre 650 et 850 °C.

5. Procédé de fabrication du matériau actif d'électrode positive de la revendication 1 par utilisation d'un procédé sol-gel, comprenant

la dissolution d'un composé du lithium, d'un composé du manganèse et d'un composé du métal M dans l'alcool ou de l'eau,
l'addition d'eau ammoniaquée à la solution obtenue afin qu'elle soit gélatinisée, et
la cuisson de la substance gélatineuse ainsi obtenue.

6. Procédé selon la revendication 5, dans lequel le composé du lithium est choisi dans le groupe formé par un sel minéral de lithium, l'hydroxyde de lithium, un sel de lithium d'un acide organique et leurs mélanges,

le composé du manganèse est choisi dans le groupe constitué par un sel minéral de manganèse, un sel de manganèse d'un acide organique ou leurs mélanges, et
le composé du métal M est sélectionné dans le groupe constitué par un sel minéral du métal M, un sel du métal M d'un acide organique et leurs mélanges.

7. Procédé selon la revendication 5 ou 6, dans lequel le composé du manganèse est choisi dans le groupe constitué par le manganate d'acide formique, le manganate d'acide oxalique, le manganate d'acide citrique, le manganate butyrique, un composé d'acétylacétone de manganèse, un manganate d'acide nitrique, un manganate d'acide acétique et un manganate d'acide sulfurique, et

le composé du métal M est sélectionné dans le groupe constitué par un sel de l'acide formique du métal M, un sel de l'acide butyrique du métal M, un composé d'acétylacétone du métal M, un sel de l'acide nitrique du métal M et un sel de l'acide sulfurique du métal M.

8. Procédé selon l'une quelconque des revendications 5 à 7, dans lequel la température de cuisson de l'étape de cuisson est comprise entre 200 et 400 °C.

9. Procédé selon l'une quelconque des revendications 5 à 8, comprenant en outre une étape d'addition d'un agent de stabilisation de gel à la solution obtenue.

10. Procédé selon la revendication 9, dans lequel l'agent de stabilisation de gel est sélectionné dans le groupe constitué par le noir de carbone, des carbones autres que le noir de carbone, la gélatine et l'alcool polyvinylique.

11. Batterie au lithium à haute tension (4,7 V), comprenant

une électrode positive ayant le matériau actif selon la revendication 1, et
une électrode négative ayant un matériau choisi dans le groupe fermé par le lithium métallique, un alliage de lithium, du carbone et du graphite.

# FIG. 1

EP 0 914 683 B1

# FIG. 2

853.8eV

855.7eV

(a)

854.04eV

(b)

855.05eV

(c)

865     860     855     850

BINDING ENERGY (eV)

# FIG. 3

POTENTIAL / V vs. Li / Li⁺

# FIG. 4

# FIG. 5